# EUROPÄISCHE PATENTSCHRIFT

(11) **EP 2 627 929 B1**
(45) Veröffentlichungstag und Bekanntmachung des Hinweises auf die Patenterteilung: **02.09.2015**
(21) Anmeldenummer: 11763702.5
(22) Anmeldetag: 30.09.2011
(51) Int. Cl.: F16H 7/12

(54) **SPANNVORRICHTUNG FÜR EINEN ZUGMITTELTRIEB EINES VERBRENNUNGSMOTORS**
TENSIONING DEVICE FOR A TRACTION MECHANISM DRIVE OF AN INTERNAL COMBUSTION ENGINE
DISPOSITIF TENDEUR POUR UN DISPOSITIF DE TRANSMISSION PAR LIEN SOUPLE D'UN MOTEUR À COMBUSTION INTERNE

(30) Priorität: 13.10.2010 DE 102010048206
(43) Veröffentlichungstag der Anmeldung: 21.08.2013
(73) Patentinhaber: Schaeffler Technologies AG & Co. KG, 91074 Herzogenaurach (DE)
(72) Erfinder: MACK, Stefan, 91054 Erlangen (DE); REICHERT, Andrea, 91448 Emskirchen (DE); HAUCK, Christian, 90518 Altdorf (DE); HARTMANN, Bernd, 91085 Weisendorf (DE); BAUER, Hans, 91452 Wilhermsdorf (DE)
(86) Internationale Anmeldenummer: PCT/EP2011/067064
(87) Internationale Veröffentlichungsnummer: WO 2012/049030

(56) Entgegenhaltungen:
- EP-A1- 1 600 228
- DE-A1- 10 044 645
- DE-A1- 19 926 615
- DE-A1-102006 019 877
- DE-A1-102008 025 552
- US-A- 4 758 208

## Beschreibung

Die Erfindung betrifft eine Spannvorrichtung für einen an einem Verbrennungsmotor angeordneten Zugmitteltrieb, der ein auf einer Antriebswelle einer Maschine angeordnetes Antriebsrad, ein oder mehrere weitere Triebräder und ein endlos umlaufendes Zugmittel aufweist, welches das Antriebsrad und die weiteren Triebräder umschlingt. Die Spannvorrichtung umfasst zwei Spannarme mit darauf gelagerten Spannrädern, die das Zugmittel in Umlaufrichtung vor und hinter dem Antriebsrad mit Spannkraft beaufschlagen, und weist ein die Spannkraft erzeugendes Federmittel und ein Spannergehäuse auf, das zumindest einen der durch die Kraft des Federmittels beaufschlagten Spannarme beweglich lagert.

### Hintergrund der Erfindung

Insbesondere bei Zugmitteltrieben mit wechselweise Drehmoment aufnehmenden und abgebenden Triebrädern und entsprechendem Wechsel von Zugtrum und Leertrum erfordert das Spannen des Leertrums eine Spannvorrichtung mit zwei Spannrädern, die das Zugmittel vor und hinter dem Antriebsrad der wechselweise antreibenden und angetriebenen Antriebswelle vorspannen. Bei der Antriebswelle handelt es sich typischer- aber nicht notwendigerweise um die Welle der als Startergenerator ausgebildeten Maschine, die Drehmoment zum Starten des Verbrennungsmotors abgibt und Drehmoment zur Stromerzeugung aufnimmt.

Während es sich bei den Zugmitteltrieben grundsätzlich um Riemen- Ketten-, oder Gliederbandtriebe handeln kann, sind Spannvorrichtungen der eingangs genannten Art typischerweise als Riemenspanner in einem Nebenaggregate-Riementrieb in diversen konstruktiven Ausgestaltungen bekannt. Beispielsweise sind in der DE 199 26 615 A1, DE 10 2008 025 552 A1 und DE 10 2006 019 877 A1 Spannvorrichtungen vorgeschlagen, die jeweils ein am Startergenerator befestigtes Spannergehäuse und zwei beweglich darin gelagerte Spannarme aufweisen, deren Spannrollen durch ein dazwischen angeordnetes Federmittel aufeinander zu kraftbeaufschlagt sind, um den Riemen zu spannen. Die DE 199 26 615 A1 und die DE 10 2008 025 552 A1 offenbaren jeweils die vorkennzeichnende Merkmale des Anspruchs 1.

### Aufgabe der Erfindung

Ausgehend hiervon liegt der vorliegenden Erfindung die Aufgabe zugrunde, eine Spannvorrichtung der eingangs genannten Art insbesondere im Hinblick auf geringe Komplexität konstruktiv zu verbessern.

### Zusammenfassung der Erfindung

Die Lösung hierfür besteht darin, dass eine um die Achse der Antriebswelle verschwenkbare Lagerung des Spannergehäuses auf der Maschine vorgesehen ist. Mit anderen Worten nimmt das selbst drehbar gelagerte Spannergehäuse an der Spannbewegung teil und die im zitierten Stand der Technik erforderliche Befestigung der Spannvorrichtung an der Maschine und dort am Startergenerator oder einem separaten Aggregateträger kann zugunsten der verringerten Bauteil-komplexität entfallen. Zudem kann die Montage der Spannvorrichtung in den Zugmitteltrieb erheblich dadurch vereinfacht werden, dass die Spannvorrichtung und das Antriebsrad verbunden sind und gemeinsam auf der Antriebswelle verschraubt werden.

In bevorzugter Ausgestaltung der Erfindung soll das Spannergehäuse mittels eines Wälzlagers auf der Antriebswelle oder dem Antriebsrad gelagert sein. Die gegenüber einer Gleitlagerung erheblich niedrigere Reibung der Wälzlagerung sorgt nicht nur für eine dauerfeste und reibungsarme Lagerung der Spannvorrichtung auf der rotierenden Antriebswelle bzw. dem rotierenden Antriebsrad, sondern geht auch mit einer entsprechend niedrigen Dämpfung der Spannvorrichtung bei den pendelnden Schwenkbewegungen des Spannergehäuses einher. Die erfindungsgemäße Spannvorrichtung ist folglich nicht nur zum Spannen von Zugmitteltrieben mit quasistatisch wechselndem Zug- und Leertrum geeignet, sondern kann auch einer dynamischen Entkopplung des Generators von den Drehungleichförmigkeiten des Verbrennungsmotors dienen. Denn aufgrund der dynamischen Pendelbewegung der am Generator quasi ungedämpft angebundenen Spannvorrichtung entsteht ein Momentengleichgewicht in der Spannvorrichtung um die Generatorachse. Dadurch werden die durch die Drehungleichförmigkeiten erzeugten Zugmittelschwingungen reduziert.

Im Falle der Lagerung auf dem Antriebsrad ist es besonders vorteilhaft, wenn die Spannvorrichtung mit dem Antriebsrad und dem Wälzlager, das in einer kreisringförmigen Ausnehmung des Antriebsrads radial zwischen einem in der Ausnehmung verlaufenden Lagerabschnitt des Spannergehäuses und einer Nabe des Antriebsrads eingesetzt ist, eine auf die Antriebswelle montierbare Baueinheit bildet. Wie oben erwähnt, liegen die Vorteile zum einen in der sehr vereinfachten Montage der Spannvorrichtung und zum anderen - aufgrund der radial verschachtelt ineinander gesetzten Komponenten - in deren in Axialrichtung der Antriebswelle äußerst kompakter Bauweise. Wenn zudem das Wälzlager und der vom Zugmittel umschlungene Außenumfang des Antriebsrads in einer gemeinsamen Triebebene verlaufen, wird das Kippmoment der Spannvorrichtung um deren Lagerstelle bei entsprechend geringer Kippbelastung des Wälzlagers minimiert. Die Befestigung des Wälzlagers gegenüber dem Antriebsrad und dem Lagerabschnitt des Spannergehäuses kann auf bekannte Art beispielsweise mittels eines Pressverbands, einem axialen Sicherungsring oder beidem erfolgen.

Als Alternative zur Lagerung des Spannergehäuses auf der Antriebswelle oder dem Antriebsrad kann die Lagerung auch auf dem (stillstehenden) Maschinengehäuse beispielsweise auf einem hinter dem Antriebsrad verlaufenden Lagerzapfen erfolgen. Diese Lagerung kann sowohl als Wälz- als auch als Gleitlagerung ausgeführt sein, wobei im Falle des Gleitlagers bedarfsweise auch eine definiert eingestellte Reibung mit vergleichsweise großer Dämpfung der Lagerstelle vorgesehen sein kann.

Zugunsten der konstruktiven Vereinfachung soll das Spannergehäuse außerdem lediglich einen der Spannarme beweglich lagern und dementsprechend der andere Spannarm im oder am Spannergehäuse befestigt sein. In dem bevorzugten Fall, dass es sich bei der Maschine um einen Startergenerator des Verbrennungsmotors handelt, soll dann das Spannrad des beweglichen gelagerten Spannarms in Umlaufrichtung des Zugmittels vor dem Antriebsrad angeordnet sein. Während des Generatorbetriebs dient folglich das Spannrad des beweglich gelagerten Spannarms zum Spannen des Leertrums. Hierdurch werden die Belastungen und das Risiko von Selbsthemmung an der Lagerung des beweglichen Spannarms gering gehalten.

Dennoch kann es insbesondere im Falle eines Startergenerator-Riementriebs auch umgekehrt vorteilhaft sein, das ortsfest auf dem Spannergehäuse gelagerte Spannrad in Umlaufrichtung des Riemens vor dem Antriebsrad anzuordnen. Bei dieser Anordnung der Spannräder ist die mit auffälliger Akustik und erhöhtem Verschleiß einhergehende Kippgefahr des auf dem Antriebsrad des Startergenerators auflaufenden Riemenabschnitts deutlich kleiner als bei der zuvor erwähnten Spannradanordnung. Denn bei dem gehäusefesten Spannrad besteht kein die Riemenverkippung begünstigendes Lagerspiel zwischen Spannarm und Spannrad.

Der beweglich gelagerte Spannarm soll einen kreisbogenförmigen Lagerabschnitt aufweisen, das Federmittel als Bogenfeder ausgebildet sein und das Spannergehäuse einen entsprechend kreisbogenförmigen Kanal aufweisen, in dem der Lagerabschnitt des Spannarms und die Bogenfeder auf dem Kreisbogen beweglich aufgenommen sind. Der Spannarm, der Kanal und die Bogenfeder sollen vorzugsweise konzentrisch zur Achse der Antriebswelle verlaufen. Unter einer Bogenfeder ist bekanntlich eine Schraubendruckfeder zu verstehen, die in ihrer Längsrichtung kreisbogenförmig gekrümmt ist.

Zwecks Verschleißschutz der Bogenfeder soll der kreisbogenförmige Kanal zumindest in radial auswärtiger Richtung der Bogenfeder mit einem oder mehreren Gleitstücken ausgekleidet sein. Zweckmäßigerweise ist der Kanal auch mit Gleitstücken am Lagerabschnitt des oder der beweglich gelagerten Spannarme versehen. Durch geeignete Werkstoffwahl und -paarung kann hierdurch auch eine erwünschte Reibung/Dämpfung zwischen Spannergehäuse und Spannarm sowie zwischen Spannergehäuse und Bogenfeder gezielt eingestellt werden.

Das Spannergehäuse kann zugunsten einer einfachen Herstellbarkeit und Montierbarkeit zwei miteinander gefügte Halbschalen umfassen, die den Kanal bilden und vorzugsweise eine nahezu oder vollständig spiegelsymmetrische Form haben. Im Hinblick auf niedrige Herstellkosten sind insbesondere als Blechumformteile oder - zugunsten eines vergleichsweise kleinen Massenträgheitsmoments um die Schwenkachse - als gespritzte Kunststoffteile hergestellte Halbschalen vorgesehen. Der Lagerabschnitt zur Lagerung des Spannergehäuses auf der Maschine kann entweder als separates Teil hergestellt und mit den Halbschalen gefügt oder einteilig an einer der Halbschalen angeformt sein. Alternativ ist auch ein Spannergehäuse mit einem ungeteilt hergestellten, rohrförmigen Kanal und je nach Gestaltung des Lagerabschnitts in einteiliger oder mehrteiliger Ausführung denkbar. Der Begriff des Fügens soll alle bekannten Verfahren zur Herstellung von Fügeverbindungen umfassen.

### Kurze Beschreibung der Zeichnungen

Weitere Merkmale der Erfindung ergeben sich aus der nachfolgenden Beschreibung und aus den Zeichnungen, in denen ein Ausführungsbeispiel einer erfindungsgemäßen Spannvorrichtung für einen Riementrieb eines Verbrennungsmotors mit Startergenerator dargestellt ist. Es zeigen:
- Figur 1: den Riementrieb und die auf dem Startergenerator gelagerte Spannvorrichtung in vereinfachter Gesamtdarstellung;
- Figur 2: die Spannvorrichtung in vergrößerter perspektivischer Ansicht;
- Figur 3: die Komponenten der Spannvorrichtung in explodierter Darstellung;
- Figur 4: die Spannvorrichtung in geschnittener Darstellung;
- Figur 5: die vordere Halbschale des Spannergehäuses;
- Figur 6: die Bogenfeder mit zugehörigem Gleitstück;
- Figur 7: die hintere Halbschale des Spannergehäuses;
- Figur 8a: den im Spannergehäuse beweglich gelagerten Spannarm mit zugehörigen Gleitstücken;
- Figur 8b: den Spannarm gemäß Figur 8a im Querschnitt und
- Figur 9: den am Spannergehäuse befestigten Spannarm.

### Ausführliche Beschreibung der Zeichnungen

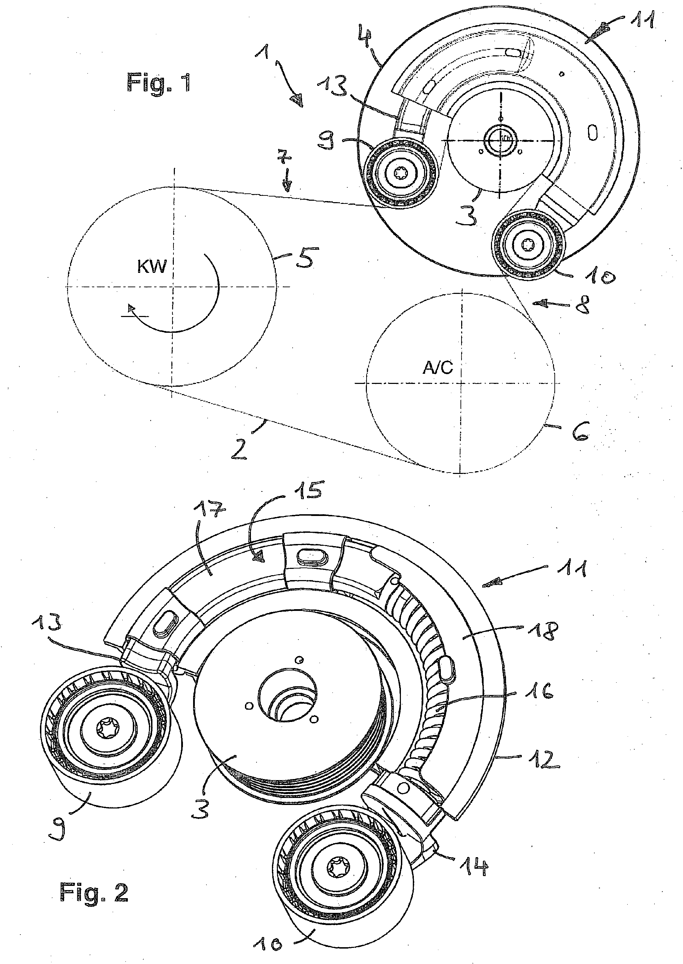

Fig. 1 zeigt teilweise schematisch das Layout eines als Nebenaggregate-Riementrieb 1 ausgebildeten Zugmitteltriebs eines Verbrennungsmotors. Das hier als Poly-V-Riemen 2 ausgebildete, in der durch den Pfeil gekennzeichneten Umlaufrichtung endlos umlaufende Zugmittel umschlingt das Antriebsrad 3 einer als Startergenerator 4 ausgebildeten Maschine und zwei weitere Triebräder 5 und 6, die auf der Kurbelwelle KW des Verbrennungsmotors bzw. auf einem Klimakompressor A/C angeordnet sind.

Das Kurbelwellenrad 5 wird auf an sich bekannte Weise zum Starten des Verbrennungsmotors im Startermodus vom Startergenerator 4 angetrieben, um bei dann gestartetem Verbrennungsmotor den Startergenerator 4 im Generatormodus anzutreiben. Das dementsprechend wechselweise Drehmoment abgebende bzw. Drehmoment aufnehmende Antriebsrad 3 bewirkt einen dazu synchronen Wechsel von Zugtrum und Leertrum am Startergenerator 4. Im Startbetrieb des Verbrennungsmotors ist dasjenige Trum 7, das in Umlaufrichtung vor dem dann das Kurbelwellenrad 5 antreibenden Antriebsrad 3 verläuft, das Zugtrum, und dasjenige Trum 8, das in Umlaufrichtung hinter dem Antriebsrad 3 verläuft, das Leertrum. Umgekehrt ist während des Generatormodus dasjenige Trum 7, das in Umlaufrichtung vor dem dann vom Kurbelwellenrad 5 angetriebenen Antriebsrad 3 verläuft, das Leertrum, und dasjenige Trum, das in Umlaufrichtung hinter dem Antriebsrad 3 verläuft, das Zugtrum.

Wie eingangs erwähnt, erfordert das Spannen des wechselnden Leertrums eine Spannvorrichtung mit zwei Spannrädern 9 und 10, die den Riemen 2 in dessen Umlaufrichtung vor und hinter dem Antriebsrad 3 mit Spannkraft beaufschlagen. Der konstruktive Aufbau einer erfindungsgemäßen Spannvorrichtung 11, die gemäß Figur 1 am Antriebsrad 3 des Startergenerators 4 angeordnet ist, sei nachfolgend anhand der Figuren 2 bis 9 erläutert.

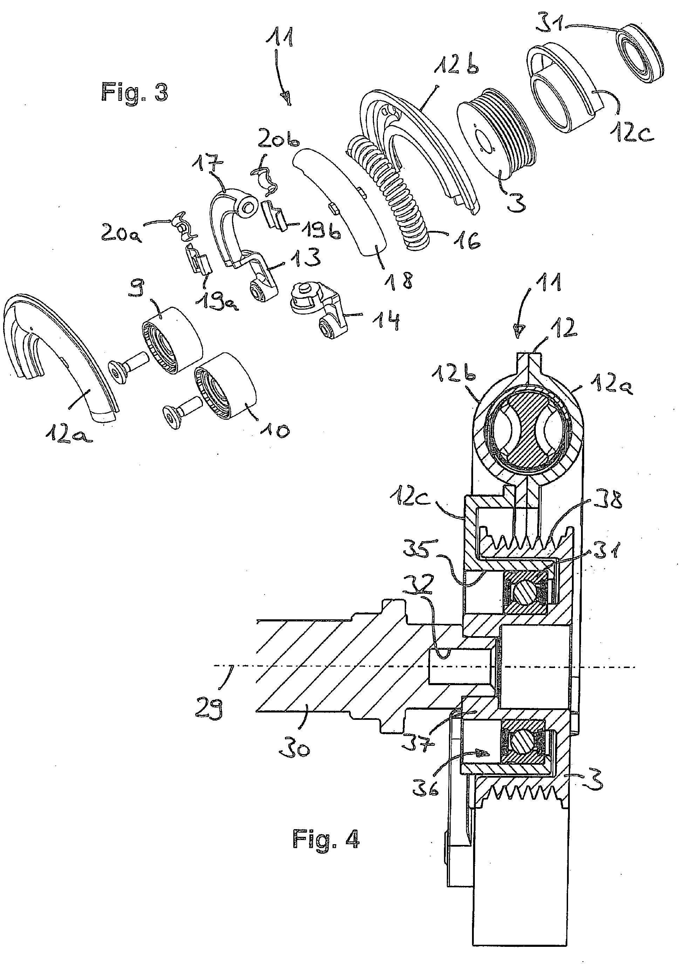

Figur 2 zeigt eine perspektivische Ansicht auf die dem Startergenerator abgewandte Stirnseite der Spannvorrichtung 11 und Figur 3 die Spannvorrichtung 11 in explodierter Darstellung, wobei zwecks besserer Illustration die in Figur 3 mit 12a bezeichnete obere Halbschale des Spannergehäuses 12 in Figur 2 entfernt ist. Die beiden Spannräder 9 und 10 sind mittels nicht näher dargestellter Wälzlager mit zugehörigen Spannarmen 13 und 14 verschraubt, von denen der eine Spannarm 13 beweglich im Spannergehäuse 12 angeordnet und der andere Spannarm 14 am Spannergehäuse 12 befestigt ist. Die Spannräder 9, 10 sind gemäß Figur 1 so im Riementrieb 1 positioniert, dass das Spannrad 9 des beweglich gelagerten Spannarms 13 in Umlaufrichtung des Riemens 2 vor dem Antriebsrad 3 angeordnet ist.

Das Spannergehäuse 12 umfasst die obere Halbschale 12a und eine dem Startergenerator 4 zugewandte untere Halbschale 12b. Die Halbschalen 12a, 12b, die als zueinander spiegelsymmetrische Blechumformteile hergestellt und axial mittels Verschweißen miteinander gefügt sind, sind so geformt, dass sie im Innern des Spannergehäuses 12 einen kreisbogenförmigen geschlossenen Kanal 15 bilden. Ein Federmittel in Form einer entsprechend gekrümmten Bogenfeder 16 und ein entsprechend kreisbogenförmiger Lagerabschnitt 17 des beweglich gelagerten Spannarms 13 sind konzentrisch zum Antriebsrad 3 und in Kreisbogenrichtung beweglich im Kanal 15 aufgenommen.

Der Kanal 15 ist in radial auswärtiger Richtung der Bogenfeder 16 mit einem Gleitstück und hier einer Gleitschale 18 mit halbkreisförmigem Querschnitt ausgekleidet. Die aus Polymaid gespritzte Gleitschale 18 dient nicht nur als Verschleißschutz der Bogenfeder 16, sondern bewirkt mittels geeigneter Werkstoff-/Oberflächenpaarung auch eine definiert eingestelltes Reibungs-/Dämpfungsverhalten bei den Relativbewegungen zwischen Bogenfeder 16 und Spannergehäuse 12. Aus den gleichen Gründen ist auch der Lagerabschnitt 17 des beweglichen Spannarms 13 in klammerartige Gleitstücke 19 und 20 aus Polyamid eingefasst, die aus zwei Paar identischen Halbklammern 19a, 19b und 20a, 20b gebildet sind und deren Umfangsposition im Kanal 15 ein weiterer Parameter ist, um das Reibungs-/Dämpfungsverhalten bei den Relativbewegungen zwischen Spannarm 13 und Spannergehäuse 12 gezielt zu beeinflussen.

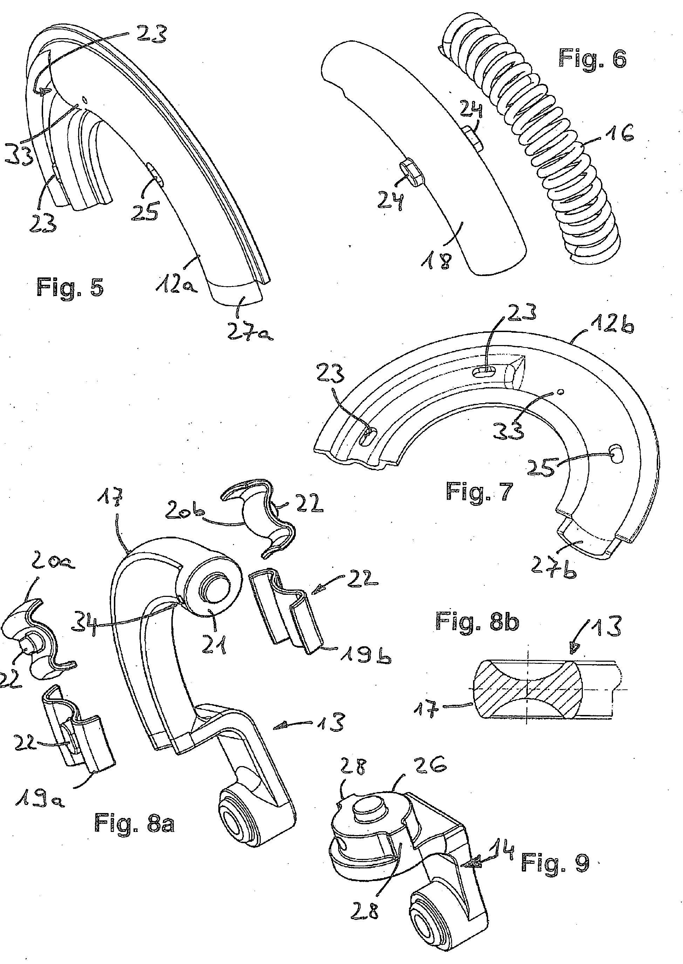

Die Gleitstücke 19, 20 gehen in vergrößerter Darstellung aus Figur 8a hervor, wobei die Halbklammern 19a, 19b und 20a, 20b mit der im Querschnitt knochenartigen Formgebung des Lagerabschnitts 17 gemäß Figur 8b korrespondieren. Gegenüber einem Kreisquerschnitt kann durch diese (zudem gewichtsreduzierende) Formgebung eine Verdrehung des Spannarms 13 um dessen gekrümmte Längsachse und folglich des Spannrads 9 um dessen Drehachse insbesondere dann reduziert werden, wenn der Spannarm 13 weit aus dem Spannergehäuse 12 ausgefahren und dessen die Verdrehung formschlüssig behindernder Hebelarm im Spannergehäuse 12 entsprechend klein ist. Als Verfahrwinkel ist vorliegend ein Winkel von 20° vorgesehen, der sich durch Anschlagen der zylindrischen Federauflage 21 am Lagerabschnitt 17 an der zum Knochenquerschnitt komplementären, d.h. erhabenen Gegenform der Halbschalen 12a und 12b ergibt. Dies wird aus den Figuren 5 und 7 mit den dort vergrößert dargestellten Halbschalen 12a, 12b deutlich.

Die Halterung der Gleitschale 18 und der Gleitstücke 19, 20 im Spannergehäuse 12 erfolgt formschlüssig mittels axial daran angeformter Nasen, die gemäß den Figuren 5, 6, 7 und 8a jeweils in dazu komplementäre Ausnehmungen oder Öffnungen eingreifen. So greifen die einheitlich mit 22 bezeichneten Nasen der Gleitstücke 19, 20 in die einheitlich mit 23 bezeichneten Öffnungen der Halbschalen 12a, 12b, und die einheitlich mit 24 bezeichneten Nasen der Gleitschale 18 greifen in die einheitlich mit 25 bezeichneten Öffnungen der Halbschalen 12a, 12b.

Aus den Figuren 5 und 7 in Verbindung mit Figur 9 ist ferner erkennbar, dass der am Spannergehäuse 12 befestigte Spannarm 14 einen Befestigungszapfen 26 aufweist, der in einem durch Halbzylinder 27a und 27b der beiden Halbschalen 12a und 12b gebildeten, rohrförmigen Vorsprung eingepresst und gleichzeitig mittels Nasen 28 gegen Verdrehen im Vorsprung gesichert ist. Beide Spannarme 13, 14 sind als Aluminium-Druckgussteile hergestellt.

Wie aus den Figuren 3 und 4 hervorgeht, ist das Spannergehäuse 12 um die Achse 29 der Antriebswelle 30 des Startergenerators 4 verschwenkbar auf diesem gelagert. In der konkreten Ausgestaltung ist zur Lagerung ein Wälzlager in Form eines Rillenkugellagers 31 vorgesehen, das einen Lagerabschnitt 12c des Spannergehäuses 12 gegenüber dem mit der Antriebswelle 30 verschraubten Antriebsrad 3 lagert. Dargestellt ist lediglich die Gewindebohrung 32 der Antriebswelle, 30 für die nicht dargestellte, an sich bekannte Zentralverschraubung des antriebesrads 3.

Die Spannvorrichtung 11 bildet mit dem Antriebsrad 3 und dem Kugellager 31 eine auf die Antriebswelle 30 äußerst einfach zu montierende Baueinheit, die lediglich mit der zentralen Verschraubung am Startergenerator 4 angebracht wird. Wie es in den Figuren 5, 6, 7 und 8a erkennbar ist, kann die Baueinheit in vorgespanntem Zustand der Bogenfeder 16 an die Montagestation angeliefert werden, indem der bewegliche Spannarm 13 im Spannergehäuse 12 mittels eines die Bohrungen 33 in den Halbschalen 12a, 12b und die Bohrung 34 im Spannarm 13 durchsetzenden (nicht dargestellten) Sicherungsstifts in Umfangsrichtung fixiert ist.

Mit erneutem Bezug auf die Figuren 3 und 4: wie die beiden Halbschalen 12a, 12b ist der stirnseitig damit gefügte und hier ebenfalls verschweißte Lagerabschnitt 12c des Spannergehäuses 12 als Blechumformteil mit einem zylindrischen Vorsprung 35 hergestellt, der in einer kreisringförmigen Ausnehmung 36 des Antriebsrads 3 konzentrisch dazu verläuft. Das Kugellager 31 ist radial zwischen dem Lagerabschnitt 12c und einer Nabe 37 des Antriebsrads 3 mittels eines Pressverbands eingesetzt. Durch die radial ineinander verschachtelte Anordnung der Komponenten laufen das Kugellager 31 und der vom Riemen umschlungene Außenumfang 38 des Antriebsrads 3 in einer gemeinsamen Triebebene. Folglich wird neben der axial besonders kompakten Bauweise das Kippmoment der Spannvorrichtung 11 um deren Lagerstelle bei entsprechend geringer Kippbelastung des Kugellagers 31 minimiert.

Die erfindungsgemäße Lagerung der Spannvorrichtung 11 bewirkt bei einem durch die momentane Betriebsweise des Startergenerators 4 bedingten Lastwechsel im Riementrieb 1, d.h. bei einer Vertauschung von Zugtrum mit Leertrum, eine Verschwenkung des Spannergehäuses 12 auf dem Startergenerator 4 um dessen Antriebswellenachse 29. Im Falle des vorliegenden Ausführungsbeispiels mit nur einem beweglichen Spannarm 13 erfolgt beispielsweise der die Verschwenkung bewirkende Kraftfluss über das Spannrad 9, den Spannarm 13, die Bogenfeder 16, das Spannergehäuse 12 und den festen Spannarm 14 auf das Spannrad 10. Eine Optimierung der Schwenkbewegung kann durch die voneinander unabhängig einstellbaren Reibparameter am Wälzlager 31 und an den Gleitpaarungen zwischen dem beweglichen Spannarm 13 und der Bogenfeder 16 einerseits und dem Spannergehäuse 12 andererseits erfolgen.

### Liste der Bezugszahlen

- 1: Riementrieb
- 2: Riemen
- 3: Antriebsrad
- 4: Startergenerator
- 5: Triebrad der Kurbelwelle
- 6: Triebrad des Klimakompressors
- 7: Trum
- 8: Trum
- 9: Spannrad
- 10: Spannrad
- 11: Spannvorrichtung
- 12: Spannergehäuse
- 13: Spannarm
- 14: Spannarm
- 15: Kanal
- 16: Bogenfeder
- 17: Lagerabschnitt des beweglichen Spannarms
- 18: Gleitschale
- 19: Gleitstück
- 20: Gleitstück
- 21: Federauflage
- 22: Nasen der Gleitstücke
- 23: Öffnungen für die Gleitstücknasen
- 24: Nasen der Gleitschale
- 25: Öffnungen für die Gleitschalennasen
- 26: Befestigungszapfen des befestigten Spannarms
- 27: Halbzylinder der Halbschalen
- 28: Nasen am Befestigungszapfen
- 29: Achse der Antriebswelle
- 30: Antriebswelle
- 31: Kugellager
- 32: Gewindebohrung
- 33: Bohrung für Sicherungsstift
- 34: Bohrung für Sicherungsstift
- 35: zylindrischer Vorsprung
- 36: kreisringförmige Ausnehmung
- 37: Nabe des Antriebsrads
- 38: Außenumfang des Antriebsrads

## Patentansprüche

1. Spannvorrichtung für einen an einem Verbrennungsmotor angeordneten Zugmitteltrieb (1), der ein auf einer Antriebswelle (30) einer Maschine (4) angeordnetes Antriebsrad (3), ein oder mehrere weitere Triebräder (5, 6) und ein endlos umlaufendes Zugmittel (2) aufweist, welches das Antriebsrad (3) und die weiteren Triebräder (5, 6) umschlingt, wobei die Spannvorrichtung (11) zwei Spannarme (13, 14) mit darauf gelagerten Spann rädern (9, 10) umfasst, die das Zugmittel (2) in Umlaufrichtung vor und hinter dem Antriebsrad (3) mit Spannkraft beaufschlagen, und ein die Spannkraft erzeugendes Federmittel (16) und ein Spannergehäuse (12) aufweist, **dadurch gekennzeichnet, dass** das Spannergehäuse (12) lediglich einen der Spannarme (13) beweglich lagert und der andere Spannarm (14) am Spannergehäuse (12) befestigt ist, wobei eine um die Achse (29) der Antriebswelle (30) verschwenkbare Lagerung des Spannergehäuses (12) auf der Maschine (4) vorgesehen ist und der beweglich gelagerte Spannarm (13) einen kreisbogenförmigen Lagerabschnitt (17) aufweist, das Federmittel (16) als kreisbogenförmige Schraubendruckfeder ausgebildet ist und das Spannergehäuse (12) einen entsprechend kreisbogenförmigen Kanal aufweist, in dem der Lagerabschnitt (17) des Spannarms (13) und die zwischen diesem Spannarm (13) und dem Spannergehäuse (12) eingespannte Schraubendruckfeder (16) auf dem Kreisbogen beweglich aufgenommen sind.

2. Spannvorrichtung nach Anspruch 1, **dadurch gekennzeichnet, dass** das Spannergehäuse (12) mittels eines Gleitlagers auf dem Gehäuse der Maschine (4) gelagert ist.

3. Spannvorrichtung nach Anspruch 1, **dadurch gekennzeichnet, dass** das Spannergehäuse (12) mittels eines Wälzlagers (31) auf der Antriebswelle (30) oder dem Antriebsrad (3) gelagert ist.

4. Spannvorrichtung nach Anspruch 3, **dadurch gekennzeichnet, dass** die Spannvorrichtung (11) mit dem Antriebsrad (3) und dem Wälzlager (31), das in einer kreisringförmigen Ausnehmung (36) des Antriebsrads (3) radial zwischen einem in der Ausnehmung (36) verlaufenden Lagerabschnitt (12c) des Spannergehäuses (12) und einer Nabe (37) des Antriebsrads (3) eingesetzt ist, eine auf die Antriebswelle (30) montierbare Baueinheit bildet.

5. Spannvorrichtung nach Anspruch 4, **dadurch gekennzeichnet, dass** das Wälzlager (31) und der vom Zugmittel (2) umschlungene Außenumfang (38) des Antriebsrads (3) in einer gemeinsamen Triebebene verlaufen.

6. Spannvorrichtung nach Anspruch 1, **dadurch gekennzeichnet, dass** es sich bei der Maschine (4) um einen Startergenerator des Verbrennungsmotors handelt, wobei das Spannrad (9) des beweglichen gelagerten Spannarms (13) in Umlaufrichtung des Zugmittels (2) vor dem Antriebsrad (3) angeordnet ist.

7. Spannvorrichtung nach Anspruch 1, **dadurch gekennzeichnet, dass** der Kanal (15) zumindest in radial auswärtiger Richtung der Schraubendruckfeder (16) mit einem oder mehreren Gleitstücken (18, 19, 20) ausgekleidet ist.

8. Spannvorrichtung nach Anspruch 1, **dadurch gekennzeichnet, dass** das Spannergehäuse (12) zwei miteinander gefügte Halbschalen (12a, 12b) umfasst, die den Kanal (15) bilden.

9. Spannvorrichtung nach Anspruch 8, **dadurch gekennzeichnet, dass** die Halbschalen (12a, 12b) eine nahezu oder vollständig spiegelsymmetrische Form haben.

## Claims

1. Tensioning device for a traction mechanism drive (1) which is disposed on an internal combustion engine and has a drive wheel (3) arranged on a drive shaft (30) of a machine (4), one or more additional driving wheels (5, 6) and a continuously revolving traction means (2) which wraps around the drive wheel (3) and the additional driving wheels (5, 6), wherein the tensioning device (11) comprises two tensioning arms (13, 14), having tensioning wheels (9, 10) which are mounted thereon and apply tensioning force to the traction means (2) in front of and behind the drive wheel (3) in the direction of revolution, and has a spring means (16), which generates the tensioning force, and a tensioner housing (12), **characterized in that** the tensioner housing (12) movably supports only one of the tensioning arms (13) and the other tensioning arm (14) is fastened to the tensioner housing (12), wherein a mounting of the tensioner housing (12), which mounting is pivotable about the axis (29) of the drive shaft (30), is provided on the machine (4) and the movably mounted tensioning arm (13) has a circular-arc-shaped bearing portion (17), the spring means (16) is configured as a circular-arc-shaped helical compression spring, and the tensioner housing (12) has a correspondingly circular-are-shaped duct (15), in which the bearing portion (17) of the tensioning arm (13) and the helical compression spring (16), which is clamped between the said tensioning arm (13) and the tensioner housing (12), (16) are movably accommodated on the circular arc.

2. Tensioning device according to Claim 1, **characterized in that** the tensioner housing (12) is mounted on the housing of the machine (4) by means of a plain bearing.

3. Tensioning device according to Claim 1, **characterized in that** the tensioner housing (12) is mounted on the drive shaft (30) or the drive wheel (3) by means of a roller bearing (31).

4. Tensioning device according to Claim 3, **characterized in that** the tensioning device (11) forms with the drive wheel (3) and the roller bearing (31), which latter is inserted in a circular-ring-shaped recess (36) of the drive wheel (3) radially between a bearing portion (12c) of the tensioner housing (12), said bearing portion running in the recess (36), and a hub (37) of the drive wheel (3), a structural unit which can be fitted onto the drive shaft (30).

5. Tensioning device according to Claim 4, **characterized in that** the roller bearing (31) and the outer periphery (38) of the drive wheel (3), which outer periphery is wrapped around by the traction means (2), run in a common drive plane.

6. Tensioning device according to Claim 1, **characterized in that** the machine (4) is constituted by a starter generator of the internal combustion engine, wherein the tensioning wheel (9) of the movably mounted tensioning arm (13) is disposed in front of the drive wheel (3) in the direction of revolution of the traction means (2).

7. Tensioning device according to Claim 1, **characterized in that** the duct (15) is lined, at least in the radially outward direction of the helical compression spring (16), with one or more sliders (18, 19, 20).

8. Tensioning device according to Claim 1, **characterized in that** the tensioner housing (12) comprises two joined-together half shells (12a, 12b), which form the duct (15).

9. Tensioning device according to Claim 8, **characterized in that** the half shells (12a, 12b) have an almost or fully mirror-symmetrical shape.

## Revendications

1. Dispositif tendeur pour un entraînement à moyen de traction (1) dispose sur un moteur à combustion interne, lequel entraînement à moyen de traction comprend une roue d'entraînement (3) disposée sur un arbre d'entraînement (30) d'une machine (4), une ou plusieurs roues menantes supplémentaires (5, 6) et un moyen de traction (2) tournant sans fin, lequel entoure la roue d'entraînement (3) et les roues menantes supplémentaires (5, 6), le dispositif tendeur (11) comportant deux bras tendeurs (13, 14) sur lesquels sont montées des roues tendeuses (9, 10) qui sollicitent par une force de tension le moyen de traction (2) dans le sens de révolution devant et derrière la roue d'entraînement (3), et comprenant un moyen de ressort (16) générant la force de tension et un boîtier de tendeur (12), **caractérisé en ce que** le boîtier de tendeur (12) supporte de manière mobile seulement l'un des bras tendeurs (13) et l'autre bras tendeur (14) est fixé au boîtier de tendeur (12), un montage, pivotant autour de l'axe (29) de l'arbre d'entraînement (30), du boîtier de tendeur (12) sur la machine (4) étant prévu et le bras tendeur (13) monté de manière mobile comprenant une portion de palier (17) en forme d'arc de cercle, le moyen de ressort (16) étant réalisé sous forme de ressort de compression hélicoïdal en forme d'arc de cercle et le boîtier de tendeur (12) comprenant un canal (15) en forme d'arc de cercle de manière correspondante, dans lequel la portion de palier (17) du bras tendeur (13) et le ressort de compression hélicoïdal (16) serré entre ce bras tendeur (13) et le boîtier de tendeur (12) sont reçus de manière mobile sur l'arc de cercle.

2. Dispositif tendeur selon la revendication 1, **caractérisé en ce que** le boîtier de tendeur (12) est monté sur le boîtier de la machine (4) au moyen d'un palier lisse.

3. Dispositif tendeur selon la revendication 1, **caractérisé en ce que** le boîtier de tendeur (12) est monté sur l'arbre d'entraînement (30) ou la roue d'entraînement (3) au moyen d'un palier à roulement (31).

4. Dispositif tendeur selon la revendication 3, **caractérisé en ce que** le dispositif tendeur (11) forme une unité structurale pouvant être montée sur l'arbre d'entraînement (30), avec la roue d'entraînement (3) et le palier à roulement (31) qui est inséré dans un évidement de forme annulaire circulaire (36) de la roue d'entraînement (3) radicalement entre une portion de palier (12c), s'étendant dans l'évidement (36), du boîtier de tendeur (12) et un moyeu (37) de la roue d'entraînement (3).

5. Dispositif tendeur selon la revendication 4, **caractérisé en ce que** le palier à roulement (31) et la périphérie extérieure (38), entourée par le moyen de traction (2), de la roue d'entraînement (3) s'étendent dans un plan d'entraînement commun.

6. Dispositif tendeur selon la revendication 1, **caractérisé en ce que** la machine (4) est un démarreur-générateur du moteur à combustion interne, la roue tendeuse (9) du bras tendeur (13) monté de manière mobile étant disposée avant la roue d'entraînement (3) dans le sens de révolution du moyen de traction (2).

7. Dispositif tendeur selon la revendication 1, **caractérisé en ce que** le canal (15) est revêtu par un ou plusieurs coulisseaux (18, 19, 20) au moins dans la direction radialement vers l'extérieur du ressort de compression hélicoïdal (16).

8. Dispositif tendeur selon la revendication 1, **caractérisé en ce que** le boîtier de tendeur (12) comporte deux demi-coques (12a, 12b) assemblées l'une à l'autre, lesquelles forment le canal (15).

9. Dispositif tendeur selon la revendication 8, **caractérisé en ce que** les demi-coques (12a, 12b) présentent une forme pratiquement ou complètement à symétrie spéculaire.
